# EUROPÄISCHE PATENTANMELDUNG

(11) **EP 1 726 201 A1**
(43) Veröffentlichungstag der Anmeldung: **29.11.2006**
(21) Anmeldenummer: 06010528.5
(22) Anmeldetag: 22.05.2006
(51) Int. Cl.: A01D 34/82, A01D 34/63

(54) **Rasenmäher mit einer Handhabe**

(30) Priorität: 24.05.2005 DE 102005024420
(71) Anmelder: Deininger, Walter, 85107 Baar-Ebenhausen (DE)
(72) Erfinder: Deininger, Walter, 85107 Baar-Ebenhausen (DE)
(74) Vertreter: Liebl, Thomas

(57) **Zusammenfassung**

Die Erfindung betrifft einen Rasenmäher (1) mit einer Handhabe (2), der ein nach unten offenes Schneidgehäuse (3) aufweist, in dem ein Schneidwerkzeug (4; 4') aufgenommen ist. Das Schneidwerkzeug (4; 4') weist eine Schneidwerkzeugnabe (10) auf und dreht sich um eine Schneidwerkzeug-Drehachse (6). In Fahrtrichtung (8) des Rasenmähers (1) gesehen sind an demselben vordere und hintere Räder (11; 11'; 13) zum Verfahren des Rasenmähers (1) angeordnet. Erfindungsgemäß ist anstelle der Vorderräder an der Schneidwerkzeugnabe (10) wenigstens ein ein Nabenrad (11; 11') ausbildendes und mit dem Schneidwerkzeug (4; 4') nicht mitdrehend verbundenes Rad, insbesondere ein Nachlaufrad angeordnet.

## Beschreibung

Die Erfindung betrifft einen Rasenmäher mit einer Handhabe nach dem Oberbegriff des Anspruchs 1.

Ein allgemein bekannter, gattungsgemäßer Rasenmäher mit einer Handhabe umfasst ein nach unten offenes Schneidgehäuse, in dem ein Schneidwerkzeug aufgenommen ist. Das Schneidwerkzeug weist eine Schneidwerkzeugnabe auf und dreht sich um eine Schneidwerkzeug-Drehachse. Zudem sind in Fahrtrichtung des Rasenmähers gesehen vordere und hintere Räder zum Verfahren des Rasenmähers vorgesehen.

Konkret ist an zwei Räderachsen jeweils im Endbereich der Achsen je ein Rad drehbar angeordnet, wobei die erste Räderachse in Fahrtrichtung gesehen am vorderen Ende des Schneidgehäuses und die zweite Räderachse in Fahrtrichtung gesehen am hinteren Ende des Schneidgehäuses angeordnet ist. Zudem ist ein Antriebsmotor auf dem Schneidgehäuse angeordnet, mittels dem das Schneidwerkzeug in eine Drehbewegung um die Schneidwerkzeug-Drehachse angetrieben werden kann für ein Schneiden bzw. Mähen des Rasens.

Nachteilig bei diesem Rasenmäher ist, das z. B. beim Mähen entlang einer Begrenzung, wie z. B. einer Beeteinfassung, aufgrund der Anordnung der Räder am Schneidgehäuse der Mäh- bzw. Schneidbereich des Schneidwerkzeugs nicht bis zu der durch die Räder gebildeten Außenkante des Rasenmähers reicht. Somit wird direkt an der Begrenzung ein nicht zufriedenstellendes Mähergebnis erhalten. Zudem wird der zu mähende Rasen durch das im vorderen Bereich und der Begrenzung zugeordnete Rad des Rasenmähers beim Verfahren desselben während des Mähens entlang der Begrenzung niedergedrückt, so dass das Schneidwerkzeug den niedergedrückten Rasen nur schwer bis gar nicht erreicht. Wird während des Mähens frontal auf ein Hindernis zugefahren, so ergibt sich die gleiche Problematik. D. h., dass durch die im vorderen Bereich des Schneidgehäuses angeordnete Räderachse der Mäh- bzw. Schneidbereich des Schneidwerkzeuges nicht bis zu der durch die Vorderachse bzw. die daran angeordneten Räder gebildete Vorderkante des Rasenmähers reicht, so dass der gemähte Bereich nur annähernd an das Hindernis heranreicht. Für ein exaktes und sauberes Mähergebnis ist nachteilig ein aufwendiges Um- und Versetzen des Rasenmähers oder ggf. sogar eine Nacharbeit mit z. B. mit einem Kantenschneider notwendig.

Aufgabe der Erfindung ist es, einen Rasenmäher mit einer Handhabe zu schaffen, mit dem die oben genannten Nachteile vermieden werden können.

Diese Aufgabe wird gelöst mit den Merkmalen des Anspruchs 1.

Gemäß Anspruch 1 ist anstelle der Vorderräder an der Schneidwerkzeugnabe wenigstens ein ein Nabenrad ausbildendes und mit dem Schneidwerkzeug nicht mitdrehend verbundenes Rad, vorzugsweise ein Nachlaufrad angeordnet.

Vorteilhaft bei diesem Rasenmäher ist, dass am Schneidgehäuse in Fahrtrichtung des Rasenmähers gesehen vorne keine Räder angeordnet sind, so dass der Mäh- bzw. Schneidbereich des Rasenmähers bis in den vorderen Randbereich des Schneidgehäuses reicht. Durch den Entfall der vorderen Räderachse bzw. der vorderen Räder ist der Mäh- bzw. Schneidbereich des Rasenmähers durch die Vorderräder nicht eingeschränkt. Somit ist beim Rasenmähen z. B. bei einem frontalen Anfahren bis zu einem Hindernis der Mäh- bzw. Schneidbereich des Rasenmähers direkt bis an das Hindernis heranreichend ausgebildet. Um trotz des Entfalles der am vorderen Endbereich des Schneidgehäuses angeordneten Räder ein stabiles und funktionssicheres Verfahren des Rasenmähers sicherzustellen, ist an der Schneidwerkzeugnabe ein Nabenrad angeordnet, das so an der Schneidwerkzeugnabe befestigt ist, dass sich bei der Drehbewegung des Schneidwerkzeugs während des Mähens bzw. Schneidens des Rasens das Nabenrad nicht mitdreht. Für ein einfaches Verfahren des Rasenmähers ist das Nabenrad als Nachlaufrad ausgebildet, wobei grundsätzlich auch ein anderweitig ausgebildetes Nabenrad, das drehbar an der Schneidwerkzeugnabe befestigt ist, denkbar ist. Alle anderen Räder des Rasenmähers sind vom Nabenrad aus gesehen im Wesentlichen dahinter angeordnet, so dass der Mäh- bzw. Schneidbereich des Rasenmähers sowohl am vorderen Randbereich des Schneidgehäuses als auch an den seitlichen Randbereichen des Schneidgehäuses durch die Räder nicht eingeschränkt ist. Dadurch reicht auch beim Rasenmähen entlang einer Begrenzungskante der Mäh- bzw. Schneidbereich des Rasenmähers bis direkt zur Begrenzungskante hin. Die am hinteren Endbereich des Rasenmähers angeordneten Hinterräder können in üblicher Weise mit einer quer zur Fahrtrichtung verlaufend Räderachse am Schneidgehäuse angeordnet sein, wobei grundsätzlich auch hier Nachlaufräder denkbar sind. Ferner könnten grundsätzlich auch in solchen Fällen dort, wo es konstruktiv möglich ist, mehrere Räder nabenseitig angeordnet werden, z. B. beabstandet nebeneinander. Bevorzugt und am wenigstens bauteilintensiv ist jedoch die Anordnung eines einzigen Nabenrades.

In einer bevorzugten Ausführung gemäß Anspruch 2 kann das Nabenrad einen nabenseitigen Abschnitt und einen radseitigen Abschnitt aufweisen, die mittels eines Drehlagers relativ zueinander verdrehbar miteinander verbunden sind. Der nabenseitige Abschnitt kann hier einen Gewindebolzen aufweisen, der in die Schneidwerkzeugnabe einschraubbar ist, so dass der radseitige Abschnitt aufgrund des Drehlagers bei einer Drehbewegung des Schneidwerkzeuges nicht mitdreht. Bei einem derartigen Aufbau des Nabenrades kann dieses mittels des Gewindebolzens einfach an der Schneidwerkzeugnabe montiert werden. Weiter wird mit dem Nachlaufrad in einer Doppelfunktion desselben auch eine Befestigungsmöglichkeit an der Abtriebswelle eines Rasenmähermotors geschaffen.

In einer Weiterbildung gemäß Anspruch 3 kann der radseitige Abschnitt eine Radaufnahme aufweisen, an der drehbar ein Laufrad angeordnet ist. Damit ist ein einfacher Aufbau des radseitigen Abschnittes vorgeschlagen mit dem ein funktionssicheres Verfahren des Rasenmähers sichergestellt ist.

In einer weiteren bevorzugten Ausgestaltung gemäß Anspruch 4 kann am Schneidwerkzeug nabenseitig eine im montierten Zustand nach unten offene, topfartige Aufnahme ausgebildet, in der das Nabenrad im montierten Zustand aufgenommen ist. Durch die Ausbildung dieser topfartigen Aufnahme am Schneidwerkzeug kann die Schneide des Schneidwerkzeuges im an die Aufnahme nach außen hin angrenzenden Schneidbereich des Schneidwerkzeuges im montierten Zustand desselben tiefer bzw. näher zum Rasen hin angeordnet werden. Zudem ist durch die topfartige Aufnahme eine Art "Schutzgehäuse" für das Nabenrad ausgebildet.

Um eine Mehrzahl unterschiedlicher Schnitthöhen des zu mähenden Rasens zu erhalten, kann gemäß Anspruch 5 das Nabenrad relativ in der Höhe gegenüber dem Schneidwerkzeug einstellbar sein. Bevorzugt sind alle Räder des Rasenmähers relativ in der Höhe gegenüber dem Schneidwerkzeug einstellbar, so dass eine einheitliche Höhenverstellung des Schneidwerkzeuges möglich ist. Insgesamt kann je nach Erfordernis des zu mähenden Rasens bezüglich der Schnitthöhe eine individuelle Einstellung des Rasenmähers durchgeführt werden, so dass mit nur einem Rasenmäher mehrere unterschiedliche Schnitthöhen des Rasens erhalten werden.

In einer Weiterbildung gemäß Anspruch 6 kann das Nabenrad mit einem radseitigen Befestigungsabschnitt höhenverstellbar in einer, vorzugsweise topfartigen, Verstellaufnahme des radseitigen Abschnitts aufgenommen sein. In einer konkreten Ausführung der Höhenverstellung kann gemäß Anspruch 7 am radseitigen Befestigungsabschnitt wenigstens eine Durchgangsöffnung angeordnet sein. An der Verstellaufnahme kann übereinander eine Mehrzahl von voneinander vorzugsweise gleichmäßig beabstandeten Durchgangsöffnungen angeordnet sein dergestalt, dass in einer gewählten Höhenposition des Nabenrades die Durchgangsöffnungen des Befestigungsabschnittes und der Verstellaufnahme fluchten und ein Fixiermittel zur Lagefixierung des Nabenrades durch die fluchtenden Durchgangsöffnungen durchsteckbar ist. Damit kann bei gelöstem Fixiermittel durch ein einfaches Verschieben des radseitigen Befestigungsabschnittes innerhalb der Verstellaufnahme eine Höhenverstellung des Nabenrades vorgenommen werden. In der gewählten Höhenposition des Nabenrades wird dann zur Lagefixierung desselben nur das Fixiermittel durch die fluchtend ausgerichteten Durchgangsöffnungen des Befestigungsabschnittes und der Verstellaufnahme hindurchgesteckt, wobei ein Sicherungssplint dabei als bevorzugtes Fixiermittel verwendet wird.

In einer weiteren Ausführung gemäß Anspruch 8 kann das Schneidgehäuse in etwa kreisförmig ausgebildet sein und sich der Schneidbereich des Schneidwerkzeuges jeweils bis in den Randbereich des Schneidgehäuses erstrecken. Damit ist der im Schneidgehäuse zur Verfügung stehende Bauraum vollständig durch das Schneidwerkzeug ausgenutzt, so dass der maximal mögliche Mäh- bzw. Schneidbereich des Rasenmähers zur Verfügung steht.

In einer konkreten Ausführung gemäß Anspruch 9 kann ein Schneidmesser als Schneidwerkzeug um die zentral im Schneidgehäuse angeordnete Schneidwerkzeug-Drehachse drehbar sein. Damit ist das Schneidmesser in der Art eines Sichelmähers einsetzbar, wodurch eine gebräuchliche und funktionssichere Art des Mähens für den Rasenmäher geschaffen ist.

In einer weiteren Ausführung gemäß Anspruch 10 kann auf dem Schneidgehäuse ein Antriebsmotor für einen Drehantrieb des Schneidwerkzeuges angeordnet sein. Dazu kann in einer Weiterbildung gemäß Anspruch 11 die Schneidwerkzeug-Drehachse durch das Schneidgehäuse nach oben hindurchgeführt sein und trieblich direkt mit dem dort angeordneten Antriebsmotor verbunden sein. Damit ist eine einfache Antriebsverbindung vom Antriebsmotor zum Schneidwerkzeug hergestellt, wobei grundsätzlich auch eine triebliche Verbindung zwischen Antriebsmotor und Schneidwerkzeug mittels einer Gliederkette und/oder eines Keilriemens und/oder mittels einer Zahnradkombination denkbar ist. Ist der Antriebsmotor zentral auf dem Schneidgehäuse auf der Schneidwerkzeug-Drehachse angeordnet, so ist durch diese Anordnung direkt oberhalb des Nabenrades, das am unteren Ende der Schneidwerkzeug-Drehachse an der Schneidwerkzeugnabe angeordnet ist, beim Verfahren des Rasenmähers zum Mähen bzw. Schneiden des Rasens eine gewünschte Stabilität gegeben ohne dass ein Kippeln des Rasenmähers aufgrund des Nabenrades und der fehlenden Vorderachse zu befürchten ist.

In einer bevorzugten Ausführungsform kann gemäß Anspruch 12 der Antriebsmotor als Benzinmotor ausgebildet sein. In einer alternativen Ausführungsform kann gemäß Anspruch 13 der Antriebsmotor als Elektromotor ausgebildet sein, der mittels eines direkten Stromanschlusses und/oder mittels wenigstens einem aufladbaren Akkumulator betreibbar ist. Damit sind die gebräuchlichen Antriebsarten für einen Rasenmäher geschaffen, so dass unterschiedlich angetriebene Modelle des Rasenmähers herstellbar sind. Dadurch kann z. B. je nach Einsatzgebiet des Rasenmähers das passende Modell gewählt werden. Der aufladbare Akkumulator kann entweder direkt über das Stromnetz geladen werden oder mittels am Rasenmäher angebrachten Solarzellen geladen werden, so dass direkt während des Rasenmähens der Akkumulator geladen wird.

In einer weiteren Ausgestaltung gemäß Anspruch 14 kann der quer zur Fahrtrichtung gesehene Abstand der beiden gegenüberliegenden hinteren Räder kleiner sein als die Schneidgehäusebreite. Somit ist auch bei einem Mähen entlang einer Begrenzungskante sichergestellt, dass das Schneidgehäuse mit dem damit definierten Schneid- bzw. Mähbereich des Rasenmähers immer direkt benachbart zur Begrenzungskante verfahren werden kann. Eine Behinderung durch die Hinterräder beim Mähen entlang der Begrenzungskante ist ausgeschlossen.

Zur Beseitigung des während des Mähens entstehenden Schnittgutes aus dem Schneidgehäuse ist gemäß Anspruch 15 ein Auswurfbereich ausgebildet. Damit ist das Schnittgut durch den Auswurfbereich auswerfbar. Eine Behinderung des Schneidwerkzeuges im Schneidgehäuse während des Mähens bzw. Schneidens des Rasens durch das dabei entstehende Schnittgut ist damit ausgeschlossen. In einer Weiterbildung gemäß Anspruch 16 kann am Auswurfbereich ein Schnittgut-Fangkorb anbringbar sein. Damit ist das Schnittgut während des Mähens auffangbar, so dass ein nachträgliches Entfernen des Schnittgutes nach dem Mähen von der frisch gemähten Rasenfläche vorteilhaft entfallen kann.

Die Handhabe des Rasenmähers kann gemäß Anspruch 17 als U-förmig gebogener Holm ausgebildet sein dergestalt, dass die U-Basis als Handgriff ausgebildet ist und die beiden freien Enden der U-Schenkel dem Rasenmäher zugeordnet und dort befestigbar sind. Damit ist eine einfache Ausführung der Handhabe geschaffen, die einfach und kostengünstig hergestellt werden kann. In einer bevorzugten Ausgestaltung gemäß Anspruch 18 können an der Handhabe eine Startvorrichtung und/oder eine Motoreinstellvorrichtung und/oder eine Motorsicherheitsabschaltung angeordnet sein. Damit sind die während des Mähens potentiell notwendigen Einstellungen des Rasenmähers bequem und funktionssicher von der Handhabe aus vom Bediener des Rasenmähers durchführbar. Durch die Motorsicherheitsabschaltung, die beispielsweise durch einen an der Handhabe angeordneten Bügel, der für ein Betreiben des Antriebsmotors betätigt werden muss, ausgebildet sein kann, kann bestehenden Sicherheitsvorschriften Rechnung getragen werden.

Anhand einer Zeichnung wird die Erfindung näher erläutert.

Es zeigen:
- Fig. 1: Eine schematische Seitenansicht eines Rasenmähers, wobei ein Schneidgehäuse des Rasenmähers geschnitten dargestellt ist,
- Fig. 2: eine schematische Frontansicht eines Schneidwerkzeuges in einer weiteren Ausführungsform,
- Fig. 3: eine schematische Frontansicht eines Nabenrades mit Höhenverstellung, und
- Fig. 4: eine schematische Ansicht des Rasenmähers von Fig. 1 von unten.

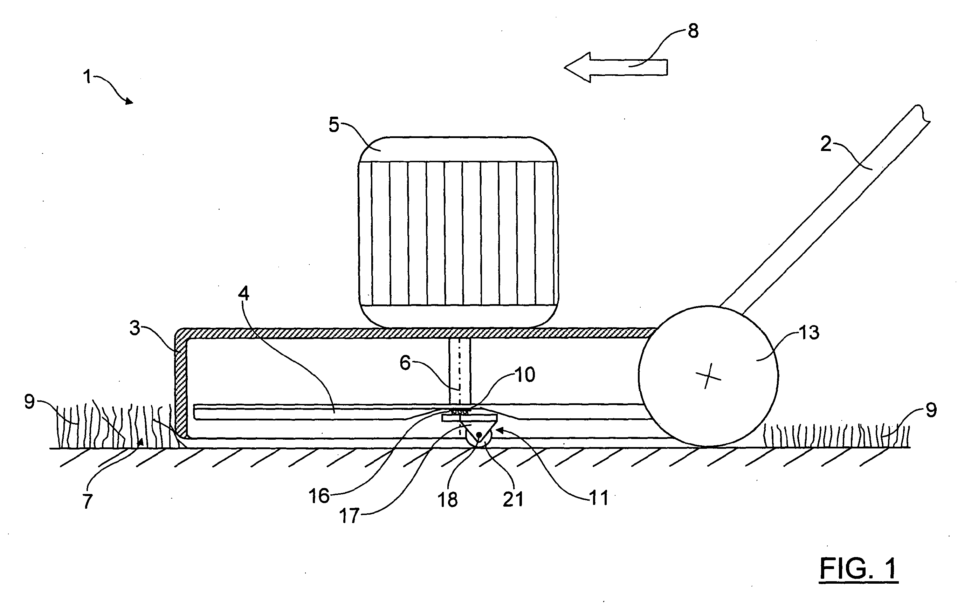

In Fig. 1 ist schematisch ein Rasenmäher 1 mit einer Handhabe 2 in einer Seitenansicht dargestellt. Der Rasenmäher 1 weist ein nach unten offenes Schneidgehäuse 3 auf, das in Fig. 1 geschnitten dargestellt ist. Innerhalb des Schneidgehäuses 3 ist ein Schneidwerkzeug 4 aufgenommen, das hier als zweiflügeliges Schneidmesser ausgebildet ist. Das Schneidwerkzeug 4 ist trieblich mit einem auf dem Schneidgehäuse 3 angeordneten Antriebsmotor 5 verbunden, wobei das Schneidwerkzeug 4 mittels des Antriebsmotors 5 in eine um eine Schneidwerkzeug-Drehachse 6 drehende Drehbewegung zum Mähen bzw. Schneiden des Rasens versetzt werden kann. Der Rasenmäher 1 steht auf einer Rasenfläche 7, wobei in Fahrtrichtung 8 des Rasenmähers 1 gesehen vor dem Rasenmäher 1 der Rasen 9 noch nicht geschnitten und hinter dem Rasenmäher durch das Schneidwerkzeug 4 geschnitten ist. Unterhalb des Schneidgehäuses 3 ist lediglich aus Übersichtlichkeitsgründen kein Rasen 9 dargestellt.

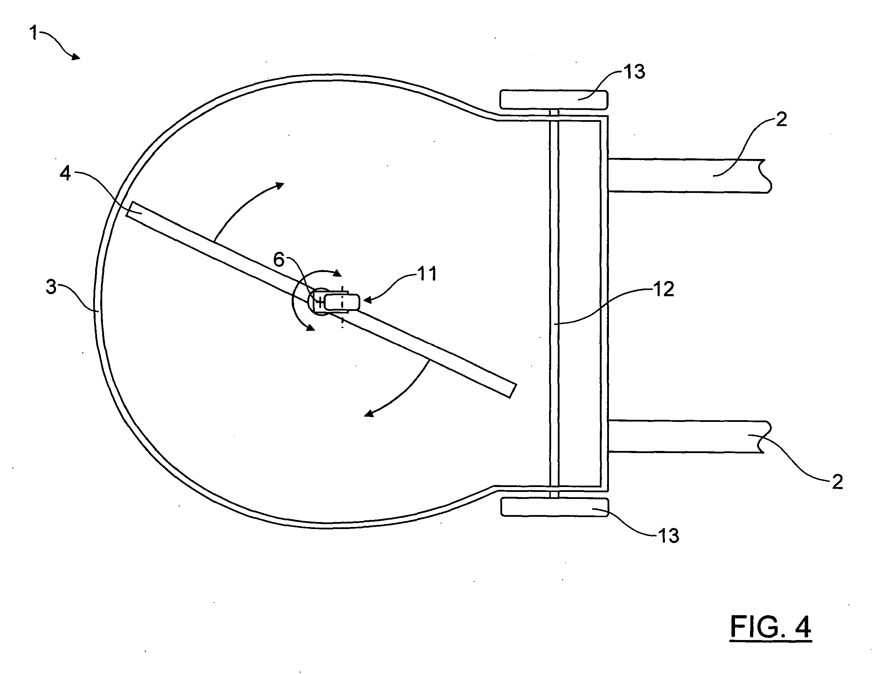

Zum Verfahren des Rasenmähers 1 weist dieser Räder auf, wobei an einer Schneidwerkzeugnabe 10 ein einziges ein Nabenrad 11 ausbildendes und mit dem Schneidwerkzeug 4 nicht mitdrehend verbundenes Nachlaufrad angeordnet ist. An einem in Fahrtrichtung 8 gesehenen hinteren Endbereich des Schneidgehäuses 3 sind an einer Räderachse 12 Hinterräder 13 angeordnet (siehe hierzu auch Fig. 4).

Das Nabenrad 11 ist anstelle von Vorderrädern am Rasenmäher 1 vorgesehen, so dass beispielsweise bei einem frontalen Anfahren eines Hindernisses mit dem Rasenmäher 1 das Schneidgehäuse 3 und damit der Schneid- bzw. Mähbereich des Rasenmähers 1 bis an das Hindernis heranreicht.

Das Nabenrad 11 weist einen nabenseitigen Abschnitt 14 und einen radseitigen Abschnitt 15 auf, die mittels eines Drehlagers 16 miteinander verbunden sind. Der nabenseitige Abschnitt 14 ist an der Schneidwerkzeugnabe 10 befestigt, fixiert gleichzeitig das Schneidmesser an einer Antriebswelle und wird durch die Drehbewegung des Schneidwerkzeuges 4 mitgedreht. Der radseitige Abschnitt 15, der eine Radaufnahme 17, an der ein um eine Nabenradachse 18 drehbares Laufrad 21 drehbar angeordnet ist, aufweist, dreht aufgrund des Drehlagers 16 bei der Drehbewegung des Schneidwerkzeuges 4 nicht mit.

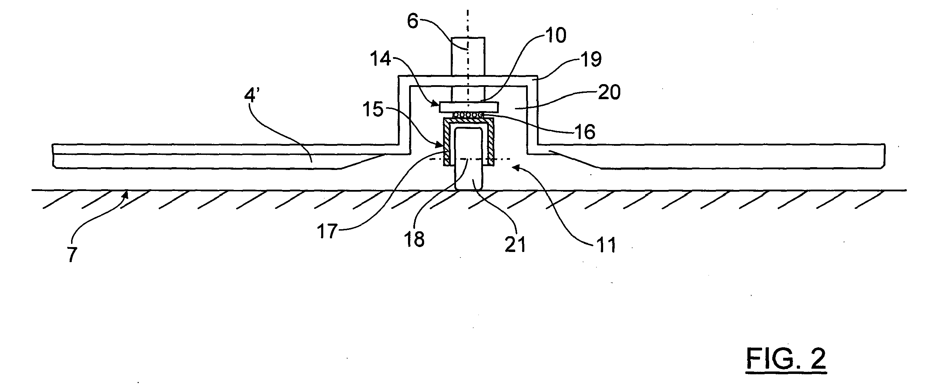

In Fig. 2 ist schematisch in einer Frontansicht ein Schneidwerkzeug 4' mit Nabenrad 11 dargestellt, wobei für Bauteile mit gleicher Funktion wie zuvor im Zusammenhang mit Fig. 1 beschrieben gleiche Bezugszeichen verwendet sind. Das Schneidgehäuse 3 sowie der Antriebsmotor 5 des Rasenmähers 1 sind hier nicht mit dargestellt. Das Schneidwerkzeug 4' weist im Unterschied zu dem Schneidwerkzeug 4 von Fig. 1 eine um die Schneidwerkzeug-Drehachse 6 umlaufend ausgebildete Schneidwerkzeugschulter 19 auf, so dass am Schneidwerkzeug 4' im montierten Zustand desselben eine nach unten offene topfartige Aufnahme 20 ausgebildet ist, innerhalb der das Nabenrad 11 aufgenommen ist. Das Nabenrad 11 ist auch hier, wie bereits im Zusammenhang mit Fig. 1 näher erläutert, als Nachlaufrad ausgebildet und weist einen nabenseitigen Abschnitt 14 und einen radseitigen Abschnitt 15 auf, die mit dem Drehlager 16 miteinander verbunden sind. Am radseitigen Abschnitt 15 ist die Radaufnahme 17 mit dem Laufrad 21 angeordnet.

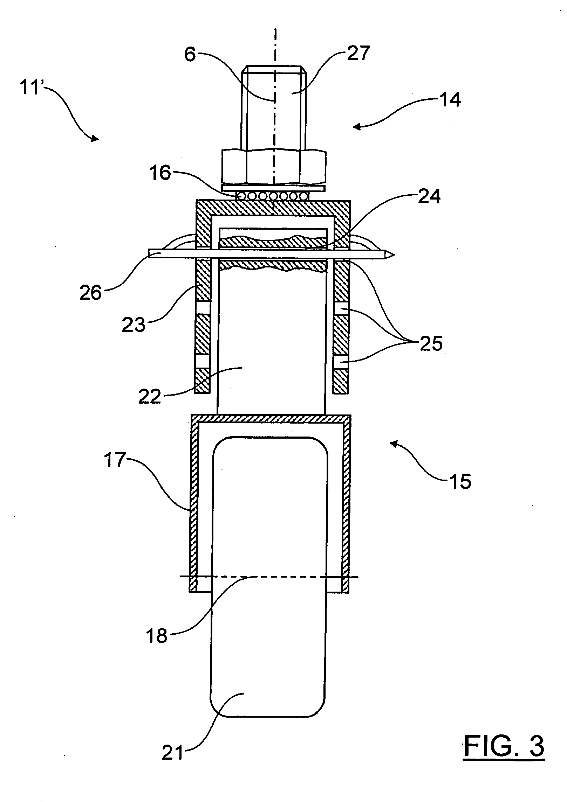

In Fig. 3 ist in einer schematischen Frontansicht ein Nabenrad 11' dargestellt, das im Gegensatz zu den in Fig. 1 und 2 gezeigten Nabenrädern 11 eine Höhenverstellfunktion aufweist. Für Bauteile mit gleicher Funktion sind auch hier gleiche Bezugszeichen verwendet. Das Nabenrad 11' weist einen radseitigen Befestigungsabschnitt 22, der im montierten Zustand in einer topfartigen Verstellaufnahme 23 des radseitigen Abschnitts 15 aufgenommen ist. Am radseitigen Befestigungsabschnitt 22 ist eine Durchgangsöffnung 24 angeordnet und an der Verstellaufnahme 23 ist übereinander eine Mehrzahl von voneinander gleichmäßig beabstandeten Durchgangsöffnungen 25 angeordnet. In einer gewählten Höhenposition des Nabenrades 11' fluchten die Durchgangsöffnungen 24 und 25 des Befestigungsabschnittes 22 und der Verstellaufnahme 23, so dass ein Sicherungssplint 26 als Fixiermittel zur Lagefixierung des Nabenrades 11' hindurchgesteckt werden kann. Beim Nabenrad 11' ist der radseitige Abschnitt 15 somit durch die Verstellaufnahme 23, den Befestigungsabschnitt 22 und die Radaufnahme 17 mit Laufrad 21 gebildet. Der nabenseitige Abschnitt 14 ist hier durch einen Gewindebolzen 27 ausgebildet, der einfach in die Schneidwerkzeugnabe 10 (hier nicht mit dargestellt) eingeschraubt werden kann. Zwischen dem Gewindebolzen 27 und der Nabenaufnahme 23 ist das Drehlager 16 angeordnet. Der nabenseitige Abschnitt 14 weist eine gegenüber dem Gewindebolzen 27 drehfeste Schraubmutter 28 auf, an die in einfacher Weise ein Werkzeug ansetzbar ist, um den Gewindebolzen 27 in die Schneidwerkzeugnabe 10 zu schrauben.

In Fig. 4 ist in einer schematischen unterseitigen Ansicht der Rasenmäher 1 gezeigt. Hierbei ist zu erkennen, dass die Schneidwerkzeug-Drehachse 6, um die das Schneidwerkzeug 4 mittels des Antriebsmotors 5 zum Schneiden bzw. Mähen des Rasens gedreht werden kann, zentral am Schneidgehäuse 3 angeordnet ist. An der Schneidwerkzeugnabe 10 ist das Nabenrad 11 als Nachlaufrad ausgebildet angeordnet. Das Schneidwerkzeug 4 reicht bis in den Randbereich des Schneidgehäuses 3, so dass durch das Schneidgehäuse 3 im Wesentlichen der Mäh- bzw. Schneidbereich des Rasenmähers definiert ist. Am hinteren Endbereich des Rasenmähers 1 ist die Räderachse 12 mit den beiden Hinterrädern 13 zu erkennen. Die Handhabe 2, die hier nur teilweise dargestellt ist, ist ebenfalls am hinteren Endbereich des Schneidgehäuses 3 angeordnet.

## Patentansprüche

1. Rasenmäher mit einer Handhabe, mit einem nach unten offenen Schneidgehäuse, in dem ein sich um eine Schneidwerkzeug-Drehachse drehendes Schneidwerkzeug aufgenommen ist, wobei das Schneidwerkzeug eine Schneidwerkzeugnabe aufweist, und
mit in Fahrtrichtung des Rasenmähers gesehen vorderen und hinteren Rädern zum Verfahren des Rasenmähers,
**dadurch gekennzeichnet,**
**dass** anstelle der Vorderräder an der Schneidwerkzeugnabe (10) wenigstens ein ein Nabenrad (11; 11') ausbildendes und mit dem Schneidwerkzeug (4; 4') nicht mitdrehend verbundenes Rad, insbesondere ein Nachlaufrad angeordnet ist.

2. Rasenmäher nach Anspruch 1, **dadurch gekennzeichnet,**
**dass** das Nabenrad (11; 11') einen nabenseitigen Abschnitt (14) und einen radseitigen Abschnitt (15) aufweist, die mittels eines Drehlagers (16) relativ zueinander verdrehbar miteinander verbunden sind, und
**dass** der nabenseitige Abschnitt (14) einen Gewindebolzen (27) aufweist, der, insbesondere für eine drehfeste Verbindung zwischen dem nabenseitigen Abschnitt (14) und dem Schneidwerkzeug (4; 4') in die Schneidwerkzeugnabe (10) einschraubbar ist.

3. Rasenmäher nach Anspruch 2, **dadurch gekennzeichnet, dass** der radseitige Abschnitt (15) eine Radaufnahme (17) aufweist, an der ein um eine Nabenradachse (18) drehbares Laufrad (21) angeordnet ist.

4. Rasenmäher nach einem der Ansprüche 1 bis 3, **dadurch gekennzeichnet, dass** am Schneidwerkzeug (4') nabenseitig eine nach unten offene, topfartige Aufnahme (20) ausgebildet ist, in der das Nabenrad (11; 11') im montierten Zustand aufgenommen ist.

5. Rasenmäher nach einem der Ansprüche 1 bis 4, **dadurch gekennzeichnet, dass** das Nabenrad (11'), vorzugsweise alle Räder, relativ in der Höhe gegenüber dem Schneidwerkzeug (4; 4') einstellbar ist bzw. sind.

6. Rasenmäher nach Anspruch 5, **dadurch gekennzeichnet, dass** das Nabenrad (11') mit einem radseitigen Befestigungsabschnitt (22) höhenverstellbar in einer, vorzugsweise topfartigen, Verstellaufnahme (23) des radseitigen Abschnitts (15) aufgenommen ist.

7. Rasenmäher nach Anspruch 6, **dadurch gekennzeichnet,**
**dass** am radseitigen Befestigungsabschnitt (22) wenigstens eine Durchgangsöffnung (24) angeordnet ist,
**dass** an der Verstellaufnahme (23) übereinander eine Mehrzahl von voneinander vorzugsweise gleichmäßig beabstandeten Durchgangsöffnungen (25) angeordnet ist dergestalt, dass in einer gewählten Höhenposition des Nabenrades (11') die Durchgangsöffnungen (24; 25) des Befestigungsabschnittes (22) und der Verstellaufnahme (23) fluchten und ein Fixiermittel, vorzugsweise ein Sicherungssplint (26), zur Lagefixierung des Nabenrades (11') durch die fluchtenden Durchgangsöffnungen (24; 25) durchsteckbar ist.

8. Rasenmäher nach einem der Ansprüche 1 bis 7, **dadurch gekennzeichnet, dass** das Schneidgehäuse (3) in etwa kreisförmig ausgebildet ist und sich der Schneidbereich des Schneidwerkzeuges (4; 4') jeweils bis in den Randbereich des Schneidgehäuses (3) erstreckt.

9. Rasenmäher nach einem der Ansprüche 1 bis 8, **dadurch gekennzeichnet, dass** ein Schneidmesser als Schneidwerkzeug (4; 4') um die zentral im Schneidgehäuse (3) angeordnete Schneidwerkzeug-Drehachse (6) drehbar ist dergestalt, dass das Schneidmesser (4; 4') in der Art eines Sichelmähers einsetzbar ist.

10. Rasenmäher nach einem der Ansprüche 1 bis 9, **dadurch gekennzeichnet, dass** auf dem Schneidgehäuse (3) ein Antriebsmotor (5) für einen Drehantrieb des Schneidwerkzeuges (4; 4') angeordnet ist.

11. Rasenmäher nach Anspruch 10, **dadurch gekennzeichnet, dass** die Schneidwerkzeug-Drehachse (6) durch das Schneidgehäuse (3) nach oben hindurchgeführt ist und trieblich direkt mit dem dort angeordneten Antriebsmotor (5) verbunden ist.

12. Rasenmäher nach Anspruch 10 oder 11, **dadurch gekennzeichnet, dass** der Antriebsmotor (5) als Benzinmotor ausgebildet ist.

13. Rasenmäher nach Anspruch 10 oder 11, **dadurch gekennzeichnet, dass** der Antriebsmotor als Elektromotor ausgebildet ist, der mittels einem direkten Stromanschluss und/oder mittels wenigstens einem aufladbaren Akkumulator betreibbar ist.

14. Rasenmäher nach einem der Ansprüche 1 bis 13, **dadurch gekennzeichnet, dass** der quer zur Fahrtrichtung gesehene Abstand der beiden gegenüberliegenden hinteren Räder (13) kleiner ist als die Schneidgehäusebreite.

15. Rasenmäher nach einem der Ansprüche 1 bis 14, **dadurch gekennzeichnet, dass** am Schneidgehäuse ein Auswurfbereich ausgebildet ist dergestalt, dass das Schnittgut durch den Auswurfbereich auswerfbar ist.

16. Rasenmäher nach Anspruch 15, **dadurch gekennzeichnet, dass** am Auswurfbereich ein Schnittgut-Fangkorb anbringbar ist dergestalt, dass das Schnittgut während des Mähens auffangbar ist.

17. Rasenmäher nach einem der Ansprüche 1 bis 16, **dadurch gekennzeichnet, dass** die Handhabe als U-förmig gebogener Holm ausgebildet ist dergestalt, dass die U-Basis als Handgriff ausgebildet ist und die beiden freien Enden der U-Schenkel dem Rasenmäher zugeordnet und dort befestigbar sind.

18. Rasenmäher nach einem der Ansprüche 1 bis 17, **dadurch gekennzeichnet, dass** an der Handhabe eine Startvorrichtung und/oder eine Motoreinstellvorrichtung und/oder eine Motorsicherheitsabschaltung angeordnet sind.
